Europäisches Patentamt

European Patent Office

Office européen des brevets

(11) Publication number: **0 315 086**
**A2**

## EUROPEAN PATENT APPLICATION

(21) Application number: 88118045.9

(22) Date of filing: **29.10.88**

(51) Int. Cl.⁴: **C08L 63/10 , C08G 59/17**

(30) Priority: **03.11.87 US 116926**

(43) Date of publication of application:
**10.05.89 Bulletin 89/19**

(84) Designated Contracting States:
**AT BE CH DE ES FR GB GR IT LI NL SE**

(71) Applicant: **THE DOW CHEMICAL COMPANY**
**2030 Dow Center Abbott Road P.O. Box 1967**
**Midland Michigan 48640-1967(US)**

(72) Inventor: **White, Mary N.**
**108 Aster Lane**
**Lake Jackson Texas 77566(US)**
Inventor: **Puckett, Paul M.**
**126 Daisy**
**Lake Jackson Texas 77566(US)**
Inventor: **Blankenship. Larry T.**
**318 Carnation**
**Lake Jackson Texas 77566(US)**

(74) Representative: **Sternagel, Hans-Günther, Dr.**
**et al**
**Patentanwälte Dr. Michael Hann Dr. H.-G.**
**Sternagel Sander Aue 30**
**D-5060 Bergisch Gladbach 2(DE)**

(54) **Rubber modified vinyl ester resins from polyglycidyl ethers of adducts of a phenol with an unsaturated hydrocarbon.**

(57) A low temperature curable composition contains a rubber modified mixture of vinyl ester resins, one vinyl ester resin being prepared from a polyglycidyl ether of an adduct of a phenol and an ethylenically unsaturated hydrocarbon and the other vinyl ester resin being prepared from a diglycidyl ether of a bisphenol or a polyglycidyl ether of a phenol- or substituted phenol-aldehyde novolac resin.

EP 0 315 086 A2

# RUBBER MODIFIED VINYL ESTER RESINS FROM POLYGLYCIDYL ETHERS OF ADDUCTS OF A PHENOL WITH AN UNSATURATED HYDROCARBON

## GOVERNMENT CONTRACT INFORMATION

This invention was made with Government support under contract no. F33615-85-C-5081 awarded by the United States Air Force. The Government has certain rights in this invention.

## FIELD OF THE INVENTION

The present invention pertains to rubber-modified vinyl ester resin compositions.

## BACKGROUND OF THE INVENTION

The art of rubber modification of vinyl ester resins is taught by D. J. Najvar in U.S. 3,892,819 which issued July 1, 1975. The current technology of rubber toughening of vinyl ester resins has been reviewed by A. R. Siebert in "Rubber Toughened Unsaturated Polyesters and Vinyl Ester Resins". TOUGHENING OF PLASTICS II, The Plastics and Rubber Institute, July 1985, London, pp 7/1 -7/9. These rubber toughened resins exhibit increased impact resistance and adhesion; however, the heat distortion temperatures of these resins are generally too low for them to be used at temperatures above 110°C. It would be desirable to have available rubber toughened vinyl ester resins which have an improvement in one or more of their properties such as heat resistance (higher heat distortion temperatures), tensile strength, tensile elongation, flexural strength or flexural modulus.

## SUMMARY OF THE INVENTION

One aspect of the present invention pertains to a composition which comprises

(A) a vinyl ester resin composition selected from

(1) a mixture of vinyl ester resins which comprises

(a) at least one vinyl ester resin prepared by reacting an ethylenically unsaturated monocarboxylic acid with an epoxy resin which is the polyglycidyl ether of an adduct of an ethylenically unsaturated hydrocarbon and a compound having at least one phenolic hydroxyl group per molecule, said epoxy resin having an average of more than 2 vicinal epoxy groups per molecule and an EEW of from about 150 to about 350; and at least one of the following selected from (b) and (c)

(b) at least one vinyl ester resin prepared by reacting at least one ethylenically unsaturated monocarboxylic acid with an epoxy resin having an average of not more than 2 vicinal epoxy groups per molecule and an EEW of from about 170 to about 600; or

(c) at least one vinyl ester resin prepared by reacting at least one ethylenically unsaturated monocarboxylic acid with an epoxy resin which is a polyglycidyl ether of a novolac resin prepared by reacting an aldehyde with a compound having at last one phenolic hydroxyl group per molecule, said epoxy resin having an average of more than 2 vicinal epoxy groups per molecule and an EEW of from about 150 to about 220;

wherein at least one of said vinyl ester resins has been modified with a rubber or elastomer wherein the total amount of elastomer or rubber is from about 2 to about 20 percent by weight based on total weight of components (A) and (B); or

(2) a vinyl ester resin which has been prepared by reacting at least one ethylenically unsaturated monocarboxylic acid with a mixture comprising

(a) at least one polyglycidyl ether of an adduct of an ethylenically unsaturated hydrocarbon and a compound having at least one phenolic hydroxyl group per molecule, said polyglycidyl ether having an average of more than 2 vicinal epoxy groups per molecule and an EEW of from about 150 to about 350; and at least one glycidyl ether selected from the following components (b) and (c)

(b) at least one diglycidyl ether of a compound having having two aromatic hydroxyl groups per molecule, said diglycidyl ether having an EEW of from about 170 to about 600; or

(c) at least one polyglycidyl ether of a novolac resin prepared by reacting an aldehyde with a compound having at least one phenolic hydroxyl group per molecule, said polyglycidyl ether having an average of more than 2 vicinal epoxy groups per molecule and an EEW of from about 150 to about 220; and
(d) a rubber or elastomer in an amount of from about 2 to about 20 percent by weight based on total weight of components (A) and (B); and optionally

(B) at least one polymerizable ethylenically unsaturated monomer; and wherein:
(i) when component (A) is component (A-1), then component (A-1-a) is present in an amount which corresponds to from about 25 to about 95 percent by weight of the combined weight of components (A-1-a), (A-1-b) and (A-1-c) and components (A-1-b) and (A-1-c) are present in an amount which corresponds to from about 5 to about 75 percent by weight of the combined weight of components (A-1-a), (A-1-b) and (A-1-c);
(ii) when component (A) is component (A-2) then component (A-2-a) is present in an amount which corresponds to from about 25 to about 95 percent by weight of the combined weight of components (A-2-a), (A-2-b) and (A-2-c) and components (A-2-b) and (A-2-c) are present in an amount which corresponds to from about 5 to about 75 percent by weight of the combined weight of components (A-2-a), (A-2-b) and (A-2-c) and component (A-2-d) is present in an amount which corresponds to from about 2 to about 20 percent by weight based on total resin weight; and
(iii) component (B) is present in an amount which corresponds to from zero to about 60 percent by weight, based on the combined weight of components (A) and (B).

Another aspect of the present invention pertains to a curable composition which comprises the aforementioned composition and a curable amount of at least one curing agent or curing catalyst therefor.

A further aspect of the present invention pertains to a laminate or composite article resulting from curing a composition comprising the aforementioned curable composition and at least one reinforcing material.

The present invention provides rubber toughened vinyl ester resins which have an improvement in one or more of its properties such as heat resistance (higher heat distortion temperatures), tensile strength, tensile elongation, flexural strength or flexural modulus.

## DETAILED DESCRIPTION OF THE INVENTION

Suitable vinyl ester resins include those which have been prepared by reacting an ethylenically unsaturated monocarboxylic acid with the adduct of an aromatic hydroxyl-containing compound and an ethylenically unsaturated hydrocarbon include, for example, those disclosed by D. L. Nelson and M. J. Lamont in U.S. Patent 4,594,398 which is incorporated herein by reference. For the present invention, the polyglycidyl ethers of the adduct of an aromatic hydroxyl-containing compound and the ethylenically unsaturated hydrocarbon suitably have an epoxide equivalent weight (EEW) of from about 150 to about 350, more suitably from about 200 to about 300.

Other vinyl ester resins which are suitable for use in the compositions of the present invention include, for example, those disclosed by Bowen in U.S. 3,066,112, by Fekete et al in U.S. 3,256,226 and U.S. 3,301,743, by Bearden in U.S. 3,367,992 and by Swisher et al in U.S. 3,564,074 all of which are incorporated herein by reference. For the present invention, the diglycidyl ethers of the dihydric phenols suitably have an epoxide equivalent weight (EEW) of from about 170 to about 600, more suitably from about 170 to about 360, most suitably from about 170 to about 250. Also suitable are the polyglycidyl ethers of novolac resins having an EEW of from about 150 to about 220, more suitably from about 170 to about 190 prepared from an aromatic hydroxyl-containing compound and an aldehyde. Particularly suitable are those vinyl ester resins prepared by reacting methacrylic acid with a diglycidyl ether of bisphenol A, a diglycidyl ether of bisphenol F, a diglycidyl ether of bisphenol K, a polyglycidyl ether of the condensation product of formaldehyde and phenol or cresol, or any combination of such glycidyl ethers.

The vinyl ester resins can be modified with any suitable rubber or elastomer. Suitable rubbers or elastomers include, for example, carboxyl-containing rubbers or elastomers, vinyl-containing rubbers or elastomers, copolymers of alkyl acrylates or methacrylates or alkyl esters of other alpha-alkyl substituted ethylenically unsaturated acids, or grafted rubber particles characterized by having a rubbery core and a grafted polymer shell which is compatible with vinyl ester resins. Vinyl ester resins can be modified with a carboxyl-containing rubber or elastomer by the method disclosed by D. J. Najvar in U.S. Patent 3,892,819 which is incorporated herein by reference. Particularly suitable rubbers or elastomers are the carboxyl-

3

containing butadiene/acrylonitrile rubbers or elastomers. Other rubbers or elastomes which can be employed similarly include poly(butadiene/acrylonitrile) copolymers which contain terminal or pendant vinyl or amine groups. These rubbers or elastomers containing acrylate, vinyl, secondary amine groups, or carboxyl-containing moieties are commercially available from the B. F. Goodrich Company under the tradename HYCAR.

Another particularly suitable form of rubber or elastomer for modification of the vinyl ester compositions of the present invention include poly(alkylacrylate) or poly(alkylmethacrylate) polymers produced by the methods disclosed by D. K. Hoffman et al. in U.S. Patent 4,690,988 which is incorporated hereinby reference. These rubbers or elastomers can also contain minor amounts of carboxyl-containing and/or glycidyl ether-containing monomers polymerized therein.

Other rubbers or elastomers which can be similarly employed include polymers formed by polymerizing monomers in situ in the epoxy resin in the presence of a stabilizer to form a stable dispersed polymer phase according to the methods disclosed by D. K. Hoffman and C. Arends in allowed copending application serial no. 664,672 filed October 25, 1984 (Atty. docket no. C-31,063-A) and also by R. E. Adam et al. in U.S. Patent 4,524,181, both of which are incorporated herein by reference.

Another particularly suitable form of rubber or elastomer for modification of the vinyl esters of the present invention includes those available in the form of a rubber-modified epoxy composition comprising (1) an epoxy resin continuous phase and (2) a stabilized discontinuous phase of grafted rubber particles, which particules have a resin-insoluble rubbery core with a shell which is compatible with the epoxy phase but has latent reactivity with a curing agent. These grafted rubber concentrates (GRC) can be prepared by the methods described by D. E. Henton, C. B. Arends, D. M. Pickelman and V. E. Meyer in copending application serial no. 002,535, filed January 12, 1987 (Atty. docket no. 32,058-A) which is incorporated herein by reference. Preferred grafted rubber compositions have, as the rubbery core components, conjugated dienes such as butadiene and isoprene, acrylate rubbers such as 2-ethylhexyl acrylate and butyl acrylate rubber and interpolymers. Particularly preferred are cores of crosslinked butadiene rubber. Preferred compounds for the grafted shell are polymers of ethylenically unsaturated compounds such as styrenics, acrylates and methacrylates, acrylonitrile, acrylic and methacrylic acid, vinylized glycidyl ethers such as glycidyl acrylate and methacrylate, combinations thereof and the like. The shell compounds contain a functionality which reacts with functionalities of the epoxy resin continuous phase. Vinyl ester resins can be prepared from these grafted-rubber modified epoxy resins by methods known in the art for use in the claimed invention.

The amount of rubber or elastomer in the vinyl ester resin composition is suitably from about 2 to about 20, more suitably from 3 to about 12, most suitably from 3 to about 10, percent by weight based on the combined weight of the vinyl ester resins.

The vinyl ester resins are employed in quantities such that a mixture of the vinyl ester resins contain suitably from about 25 to about 95, more suitably from about 30 to about 90 most suitably from about 40 to about 85, percent by weight of the vinyl ester resin which has been prepared from an epoxy resin which is a polyglycidyl ether of an adduct of a compound having at least one aromatic hydroxyl group and an ethylenically unsaturated hydrocarbon (component A-1-a or A-2-a) and the remainder, suitably from about 5 to about 75, more suitably from about 10 to about 70, most suitably from about 15 to about 60, percent by weight being composed of the other types of vinyl ester resins such as those prepared by reacting an ethylenically unsaturated acid with an epoxy novolac resin, or a diglycidyl ether of a bisphenol or a combination thereof.

In the preparation of the vinyl ester resins, essentially any ethylenically unsaturated monocarboxylic acid can be employed. Particularly suitable are ethylenically unsaturated organic carboxylic acids which can be aliphatic, cycloaliphatic or aromatic, and can be monocarboxylic or polycarboxylic. Examples of the acids which can be utilized include acrylic acid, methacrylic acid, cyclohexene carboxylic acid, maleic acid, crotonic acid, alpha-phenylacrylic acid, tetrahydrophthalic acid, 2,4-octadienedicarboxylic acid, dodecadienoic acid and the like.

Particularly preferred acids include the ethylenically unsaturated acids such as, for example, acrylic acid, methacrylic acid, crotonic acid, alphaphenylacrylic acid, alpha cyclohexylacrylic acid, maleic acid, alpha-chloromaleic acid, tetrahydrophenolic acid, itaconic acid, fumaric acid, cyanoacrylic acid, methoxyacrylic acid, and the like.

Also particularly preferred are the partial esters of polycarboxylic acids, and particularly the alkyl, alkenyl, cycloalkyl and cycloalkenyl esters of polycarboxylic acids such as, for example, allyl hydrogen maleate, butyl hydrogen maleate, allyl hydrogen tetrahydrophthalate, allyl hydrogen succinate, allyl hydrogen fumarate, butenyl hydrogen tetrahydrophthalate, cyclohexenyl hydrogen maleate, cyclohexyl hydrogen tetrahydrophthalate, and the like, and mixtures thereof.

If desired, an anhydride of an unsaturated acid such as, for example, maleic anhydride, can be employed in combination with the monocarboxylic acid, or partial ester of a polycarboxylic acid in the preparation of the vinyl ester resins which are suitable for use herein.

In the preparation of the vinyl ester resin of components (A-1-a) or (A-2-a), it is preferred to employ as the epoxy resin, a polyglycidyl ether of the adduct of phenol and dicyclopentadiene.

In the preparation of the vinyl ester resin of components (A-1-b) or (A-2-b), it is preferred to employ as the epoxy resin, a diglycidyl ether of bisphenol A.

In the preparation of the vinyl ester resin of components (A-1-c) or (A-2-c), it is preferred to employ as the epoxy resin, a polyglycidyl ether of a phenol-formaldehyde novolac resin.

As noted above, it does not matter whether the vinyl ester resins are prepared separately and one or more of them modified with a rubber or elastomer and subsequently blended, or the different epoxy resins being blended together and subsequently reacted with the ethylenically unsaturated monocarboxylic acid and rubber or elastomer, so long as the proper amounts of the various components are employed.

Suitable polymerizable ethylenically unsaturated monomers (diluents) which can be employed include those disclosed by the aforementioned U.S. Patents 3,892,819 and 4,594,398. Particularly suitable polymerizable ethylenically unsaturated monomers include, for example, aromatic compounds such as styrene, alpha-methylstyrene, dichlorostyrene, vinyl naphthalene, divinylbenzene and the like, unsaturated esters such as acrylic and methacrylic esters, vinyl acetate, vinyl benzoate, vinyl chloroacetate, vinyl laurate, and the like, unsaturated acids such as acrylic and alpha-alkylacrylic acid, butenoic acid, allybenzoic acid, vinylbenzoic acid, and the like, halides such as vinyl chloride, vinylidene chloride, nitriles such as acrylonitrile, methacrylonitrile, diolefins such as butadiene, isoprene, methylpentadiene, esters of polycarboxylic acids such as diallyl phthalate, divinyl succinate, diallyl maleate, divinyl adipate, dichloroallyl tetrahydro-phthalate, and the like, and mixtures thereof.

The polymerizable ethylenically unsaturated monomers (diluents) are employed in amounts which correspond to suitably from zero up to about 60, more suitably from about 10 to about 55, most suitably from about 20 to about 50, percent by weight based upon the combined weight of monomer and modified vinyl ester resin.

Suitable curing agents or curing catalysts include those which generate free radicals such as organic peroxides, azo compounds, and the like. Particularly suitable such curing agents or catalysts include, for example, the peroxides, such as benzoyl peroxide, tertiary-butyl hydroperoxide, ditertiary-butyl peroxide, hydrogen peroxide, potassium persulfate, methyl cyclohexyl peroxide, methyl ethyl ketone peroxide, cumene hydroperoxide, acetyl benzoyl peroxide, tetralin hydroperoxide, phenylcyclohexane hydroperoxide, tertiary-butyl peroctoate, tertiary-butylisopropylbenzene hydroperoxide, tertiary-butyl peracetate, tertiary-butyl perbenzoate, ditertiary-amyl perphthalate, ditertiary-butyl peradipate, tertiary-amyl percarbonate, bis(4-t-butylcyclohexyl)peroxydicarbonate, and the like, and mixtures thereof and azo compounds such as 2,2'-azobisisobutyronitrile, dimethyl 2,2'-azobisisobutyrate, 2,2'-azobis(2,4-dimethylvaleronitrile, 2,2'-azobisisotoluylamide, and the like. Particularly preferred catalysts include the diaroyl peroxide, tertiary-alkyl hydroperoxides, alkyl peresters of percarboxylic acids and particularly those of the above noted groups which contain no more than 18 carbon atoms per molecule.

The curing agents or curing catalysts are suitably employed in amounts of from about 0.1 to about 5, more suitably from about 0.1 to about 3, percent by weight based on total resin weight.

Also, if desired, accelerators for the curing agents or catalysts can be employed. Suitable such accelerators include, metal salts of carboxylic acids such as, for example, cobalt naphthenate or vanadium neodecanoate either alone or in combination with tertiary amines such as, for example, N,N-dimethylaniline, N,N-diethylaniline, N,N-dimethylacetoacetamide or N,N-dimethylparatoluidine .

The accelerators are suitably employed in amounts of from about 0.02 to about 1, more suitably from about 0.05 to about 0.6, percent by weight based on total resin weight.

The compositions of the present invention can also, if desired, contain reinforcing materials in the form of mats, woven fabric, unidirectional fibers, rovings, random fibers or filaments, inorganic fillers, inorganic whiskers, hollow spheres, ceramic and glass spheres, and the like. These reinforcing materials can be prepared from glass fibers, aramid fibers, graphite fibers, and polymer fibers such as nylon, polyalkylene terephthalate, polyethylene, polypropylene, polyesters, combinations thereof and the like.

If desired, other components can be included in the compositions of the present invention, such as, for example, pigments, dyes, fillers, wetting agents, stabilizers, and the like. These components are included in amounts which are effective for their purpose, e.g. pigments and dyes are employed in amounts sufficient to color the composition to the extent desired and wetting agents are employed in amounts sufficient to wet out any reinforcing materials present in the compositions.

The compositions of the present invention can be employed in the preparation of laminates or composites which are useful in the construction of storage vessels, automobiles, airplanes, and other structures and structural parts that can be produced via filament winding, pultrusion, braiding, and resin transfer molding. Further uses include tank and vessel liners, coatings, and the like.

The following examples are illustrative of the invention, but are not to be construed as to limiting the scope thereof in any manner.

In the following examples and comparative experiments, the dicyclopentadiene employed contains 98% dicyclopentadiene by weight. The remaining 2 percent is composed of higher oligomers of cyclopentadiene and other unsaturated hydrocarbons.

## Example 1

A rubber modified epoxy resin is prepared by reacting 200 g of a diglycidyl ether of bisphenol A (179 EEW) with 28 g of bisphenol A and 101.6 g of a carboxyl-modified acrylonitrile/butadiene rubber in the presence of 0.42 g of a 70 weight percent methanolic solution of tetrabutylphosphonium acetate•acetic acid complex catalyst. The rubber modified epoxy resin (calculated EEW without rubber = 250) is blended with 684 g of an epoxy resin prepared from dicyclopentadiene and phenol having a functionality of about 3.2 (265 EEW). The mixture of epoxy resins is reacted catalytically with a stoichiometrically equivalent amount of methacrylic acid (315 g) in the presence of air and hydroquinone, 400 ppm, until an acid content of about 1% is reached.

A portion, 64 parts by weight (pbw), of the above prepared rubber modified vinyl ester resin is dissolved in styrene to yield a blend containing about 36 percent by weight of styrene. This blend is designated as Example 1-A. Properties of the resin are listed in Table I.

Another portion, 64 pbw of the above prepared rubber modified vinyl ester resin is dissolved in a blend of the ethylenically unsaturated monomers containing about 10 percent divinyl benzene and 90 percent styrene by weight to yield a blend containing 36 percent by weight of the ethylenically unsaturated monomers. This blend is designated as Example 1-B. The properties of the resin are reported in Table I.

## Comparative Experiment A

A reactor is charged with 2588 g of diglycidyl ether of bisphenol A having an EEW of 182, 315 g of bisphenol A to yield a calculated EEW of 250 and 772 g of a carboxyl-containing butadiene-acrylonitrile rubber obtained from B. F. Goodrich Chemicals as HYCAR 1300X18 CTBNX. The mixture is reacted in the presence of a 70% methanolic solution of tetrabutylphosphonium acetate•acetic acid complex catalyst at 150° C under a nitrogen atmosphere for 1.5 hours to form a rubber modified polyepoxide having an EEW of 330-350. This resin is reacted catalytically at about 100° C with 726 g (1 molar equiv.) of glacial methacrylic acid in the presence of air and 400 ppm hydroquinone for about 3 hours to reach a carboxylic acid content of 1.2%. The solution is cooled to 80° C before dilution with 2951 g of styrene to yield a blend containing about 40% styrene by weight.

## Example 2

A vinyl ester resin is prepared by charging a reactor with 600 g of an epoxy resin prepared from dicyclopentadiene and phenol having an average functionality of about 3.2 and an epoxide equivalent weight (EEW) of 265. The resin is heated at 120° C for 1 hour with 0.43 g of a 70 weight percent methanolic solution of ethyltriphenylphosphonium acetate•acetic acid complex catalyst with a nitrogen sparge. To the resulting mixture is added 200 g of the diglycidyl ether of bisphenol A having an EEW of 179 thereby forming a homogeneous solution having an EEW of 208. The mixture of epoxy resins is reacted catalytically with a stoichiometric equivalent amount (322 g) of glacial methacrylic acid in the presence of air and 400 ppm hydroquinone at 100° C to 115° C until a 1.1% acid concentration is reached. The vinyl ester resin is dissolved in 508 g of styrene and 127 g of divinyl benzene to yield a blend containing about 36 percent monomeric diluent by weight. The diluent contained 80% by weight styrene and 20% by weight divinylbenzene.

The vinyl ester resin prepared above is mixed in a one to one weight ratio with the vinyl ester resin prepared in comparative experiment A to produce a blend containing 4.9% CTBNX rubber.

Example 3

A reactor is charged with 600 g of an epoxy resin prepared from dicyclopentadiene and phenol having an average functionality of about 3.2 and an epoxide equivalent weight (EEW) of 265. The resin is heated at 120°C for 1 hour with 0.43 g of a 70 weight percent methanolic solution of ethyltriphenylphosphonium acetate•acetic acid complex catalyst with a nitrogen sparge. To the resulting mixture is added 200 g of the diglycidyl ether of bisphenol A having an EEW of 179 thereby forming a homogeneous solution having an EEW of 230. The mixture of epoxy resins is reacted catalytically with a stoichiometric equivalent amount (290 g) of glacial methacrylic acid in the presence of air and 400 ppm hydroquinone at 100°C to 115°C until a 1.1% acid concentration is reached. The vinyl ester resin is dissolved in 554 g of styrene and 61 g of divinyl benzene to yield a blend containing about 36 percent total monomer (styrene + divinyl benzene) by weight.

The above prepared vinyl ester resin is mixed with a vinyl-terminated butadiene-acrylonitrile rubber obtained from B. F. Goodrich Chemicals as HYCAR 1300X23 VTBNX to produce a blend containing 5% rubber by weight.

Comparative Experiment B

A reactor is charged with 600 g of an epoxy resin prepared from a phenol-formaldehyde novolac resin having an average functionality of 3.6 and an EEW of 180. The resin is heated at 120°C for 1 hour with 0.4 g of a 70% methanolic solution of ethyltriphenylphosphonium acetate•acetic acid complex catalyst with a nitrogen sparge. A 200 g aliquot of a diglycidyl ether of bisphenol A having an EEW of 181 is added to produce a resin blend having an EEW of 180. The mixture of epoxy resins is reacted catalytically with a stoichiometrically equivalent amount, 385 g, of glacial methacrylic acid in the presence of air and 400 ppm hydroquinone at 100°C to 115°C until a 1.1% acid concentration is reached. The resultant vinyl ester resin is dissolved in styrene such that the resultant mixture has a styrene content of 36 weight percent.

The vinyl ester resin prepared above is mixed in a one to one weight ratio with the vinyl ester resin prepared in Comparative Experiment A to produce a blend containing 4.9% CTBNX rubber by weight.

Example 4

A reactor is charged with 400 g of an epoxy resin prepared from dicyclopentadiene and phenol having an average functionality of about 3.2 and an epoxide equivalent weight (EEW) of 265 and 400 g of an epoxy resin prepared from a phenol-formaldehyde resin having an average functionality of 3.6 and an EEW of 180. The resin is heated at 120°C for 1 hour with 0.6 g of a 70 weight percent methanolic solution of ethyltriphenylphosphonium acetate•acetic acid complex catalyst with a nitrogen sparge. The mixture of epoxy resins is reacted catalytically with a stoichiometric equivalent amount, 300 g, of glacial methacrylic acid in the presence of air and 400 ppm hydroquinone at 100°C to 115°C until a 1.1% acid concentration is reached. The vinyl ester resin is dissolved in styrene (611 g) to yield a blend containing about 36 percent styrene by weight.

The vinyl ester resin prepared above is mixed in a one to one weight ratio with a vinyl ester resin prepared in Comparative Experiment A to produce a blend containing 4.9% CTBNX rubber by weight.

Example 5

A reactor is charged with 80 g of a diglycidyl ether of bisphenol A having an EEW of 181, 28.2 g of bisphenol A and 240 g of a diglycidyl ether of bisphenol A containing 40 percent by weight of 2-ethylhexyl acrylate copolymer rubber prepared by the method disclosed in example 3 or Hoffman et al. allowed application serial no. 517,130 filed July 25, 1983 such that the epoxy resin has an EEW of 290; except that a mixture of 2 parts t-butylperoctoate and 1 part t-butylperbenzoate are used instead of N,N'-azobisisobutyronitrile, and the catalyst and monomer mixture are added over 2 hours to the epoxy resin mixture instead of the mixture of initiator, monomers and resin addition being fed to the reactor over a period of one hour. The mixture is reacted in the presence of a 70% methanolic solution of tetrabutylphosphonium acetate•acetic acid complex catalyst at 150°C under a nitrogen atmosphere for 1.5 hours to form a rubber modified polyepoxide having an EEW of 314. This product is blended with 593 g of an epoxy resin prepared from dicyclopentadiene and phenol having a functionality of 3.2 and an EEW of 250. The mixture of resins is reacted catalytically at 115°C with 302 g (1 molar equiv.) of glacial methacrylic acid in the presence of air and 400 ppm hydroquinone for 3.2 hours to reach a carboxylic acid content of 1.2%. The reactants are cooled to 80°C before dilution with 701 g of styrene to yield a blend containing 36 percent styrene by weight.


Comparative Experiment C

A reactor is charged with 60 g of a diglycidyl ether of bisphenol A having an EEW of 181, 26.9 g of bisphenol A and 240 g of a diglycidyl ether of bisphenol A having an EEW of 290 containing 40% by weight 2-ethylhexyl acrylate copolymer rubber prepared by the same method as Example 5 . The mixture is reacted in the presence of tetrabutylphosphonium acetate•acetic acid complex catalyst under a nitrogen atmosphere for 1.5 hours at 150°C to form a rubber modified polyepoxide having an EEW of 350. This product is blended with 539 g of an epoxy resin prepared from a phenol-formaldehyde novolac having an average functionality of 3.6 and an EEW of 222. The mixture of resins is reacted catalytically at 115°C with 342 g, (1 molar equiv.) of glacial methacrylic acid in the presence of air and 400 ppm hydroquinone for 3.2 hours to reach a carboxylic acid content of 1.2%. The reactants are cooled to 80°C before dilution with 680 g of styrene to yield a blend containing about 36 percent styrene by weight.


Example 6

The resins prepared in the foregoing examples and comparative experiments are cured by blending with 0.3 phr (parts per hundred parts resin and monomer(s)) cobalt naphthenate and 1.22 phr of methyl ethyl ketone peroxide (8.8% active oxygen). The resins are cured 16 hours at 25°C and post cured for 2 hours at 155°C. After cooling, the cured resins are prepared for testing by the following methods: ASTM D-638 (tensile); ASTM D-790 (flexural) and ASTM D-648 (heat distortion temperature, HDT).

The properties of the cured resins are given in Table I.

EP 0 315 086 A2

TABLE I

| Example or Comp. Expt. | Weight Ratio of Base Resin Components | | | | Weight Ratio of Diluent Components | | Weight Ratio of Resin to Diluent |
|---|---|---|---|---|---|---|---|
| | PFN Epoxy Resin[a] | DCPD Phen. Resin[b] | DGEBA Resin[c] | Rubber Content[d] | Styrene wt.% | Divinyl-benzene wt.% | |
| Ex. 1A | --- | 75 | 25 | 4.9% CTBNX | 100 | --- | 64/36 |
| C.E. A* | --- | --- | 100 | 10% CTBNX | 100 | --- | 60/40 |
| Ex. 1B | --- | 75 | 25 | 4.9% CTBNX | 90 | 10 | 64/36 |
| Ex. 2 | --- | 38 | 62 | 4.9% CTBNX | 90 | 10 | 64/36 |
| Ex. 3 | --- | 75 | 25 | 4.9% VTBNX | 90 | 10 | 64/36 |

*Not an example of the present invention
[a]The glycidyl ether of a phenol-formaldehyde novolac resin.
[b]The glycidyl ether of the reaction product of dicyclopentadiene with phenol.
[c]The diglycidyl ether of bisphenol A.
[d]Based on total weight of the resin and diluent.

## TABLE I (continued)

| Example or Comp. Expt. | Clear Casting Properties | | | | | |
|---|---|---|---|---|---|---|
| | Elong. % | Tensile Strength psi | Tensile Modulus psi x 10$^{-5}$ | Flexural Strength psi (kPa) | Flexural Modulus psi x 10$^5$ (kPa x10$^{-5}$) | HDT °F (°C) |
| Ex. 1A | 4.68 | 12,200 (84,117) | 4.42 (30.48) | 23,300 (160,649) | 5.09 (35.09) | 253 (123) |
| C.E. A* | 8.5 | 10,000 (68,948) | 3.6 (24.8) | 18,500 (127,554) | 4.9 (33.8) | 172 (78) |
| Ex. 1B | 4.52 | 12,400 (85,496) | 4.39 (30.27) | 21,200 (146,170) | 5.02 (34.61) | 264 (129) |
| Ex 2 | 4.10 | 11,300 (77,911) | 4.52 (31.16) | 18,800 (129,622) | 5.10 (35.16) | 241 (116) |
| Ex. 3 | 4.73 | 10,100 (69,637) | 4.03 (27.79) | 18,400 (126,864) | 4.60 (31.72) | 282 (139) |

*Not an example of the invention.

[a]The glycidyl ether of a phenol-formaldehyde novolac resin.

[b]The glycidyl ether of the reaction product of dicyclopentadiene with phenol.

[c]The diglycidyl ether of bisphenol A.

EP 0 315 086 A2

## TABLE I (continued)

| Example or Comp. Expt. | Weight Ratio of Base Resin Components | | | | Weight Ratio of Diluent Components | | Weight Ratio of Resin to Diluent |
|---|---|---|---|---|---|---|---|
| | PFN Epoxy Resin[a] | DCPD Phen. Resin[b] | DGEBA Resin[c] | Rubber Content[d] | Styrene wt.% | Divinyl-benzene wt.% | |
| Ex. 4 | 25 | 25 | 50 | 4.9% CTBNX | 100 | --- | 62/38 |
| Ex. 5 | --- | 70 | 30 | 4.9% Acrylate | 100 | --- | 64/36 |
| C.E. B.* | 38 | --- | 62 | 4.9% CTBNX | 100 | --- | 62/38 |
| C.E. C* | 70 | --- | 30 | 5.1% Acrylate | 100 | --- | 64/36 |

*Not an example of the present invention
[a]The glycidyl ether of a phenol-formaldehyde novolac resin.
[b]The glycidyl ether of the reaction product of dicyclopentadiene with phenol.
[c]The diglycidyl ether of bisphenol A.
[d]Based on total weight of the resin and diluent.

EP 0 315 086 A2

TABLE I (continued)

| Example or Comp. Expt. | Clear Casting Properties | | | | | |
|---|---|---|---|---|---|---|
| | Elong. % | Tensile Strength psi (kPa) | Tensile Modulus psi x 10-5 (kPa x 10-5) | Flexural Strength psi (kPa) | Flexural Modulus psi x 10-5 (kPa x 10-5) | HDT °F |
| Ex. 4 | 3.92 | 11,500 (79,290) | 4.37 (30.13) | 19,700 (135,828) | 4.99 (34.41) | 257 (125) |
| Ex. 5 | 5.5 | 11,200 (77,222) | 4.3 (29.6) | 19,800 (136,517) | 4.8 (33.1) | 284 (140) |
| C.E. B* | 4.84 | 11,700 (80,660) | 4.48 (30.89) | 20,600 (142,033) | 5.04 (34.7) | 235 (113) |
| C.E. C* | 4.5 | 10,700 (73,774) | 4.3 (29.6) | 17,600 (121,348) | 4.8 (33.1) | 274 (134) |

*Not an example of the invention.

## Example 7

A laminate is prepared from the rubber modified resin of Example 1 and designated as Example 1A catalyzed with 1.5% by weight cumene hydroperoxide and 0.3% by weigh cobalt naphthenate (6% by weight cobalt) as an accelerator. The laminate is reinforced in a symmetrical layup with four layers of fiber glass which are respectively corrosion-veil/chopped strand mat/mat/corrosion-veil. The laminate is prepared by hand rolling the resin into each layer of substrate material on a MYLAR covered aluminum plate. After all layers of reinforcement are saturated with resin, the stack is covered with another MYLAR sheet and aluminum plate. The plates are pressed together and the laminate is cured at 131° C for two hours. The cured laminate has a tensile strength of 18,500 psi (127554 kPa) and a flexural modulus of 870.000 psi (6 x $10^6$ kPa).

## Example 8

A laminate is prepared from the rubber modified resin prepared in Example 1 and designated as Example 1-A and 6 plies of a graphite fiber fabric and cured under 12 psig (82.7 kPa) at 80°C for 30 minutes. The curing catalyst is benzoyl peroxide, 1 phr. The finished laminate contains 68 percent by weight graphite fiber and 32 percent by weight resin.

## Example 9

The rubber modified resin prepared in Example 1 and designated as Example I-A is cured with 1 phr of benzoyl peroxide and 0.05 phr N,N-dimethylparatoluidine as an accelerator for 2 hours at 82°C. The glass transition temperature determined on a Mettler TA-3000 thermal mechanical analyzer is 132°C.

## Claims

1. A composition which comprises
(A) a vinyl ester resin composition selected from
(1) a mixture of vinyl ester resins which comprises
(a) at least one vinyl ester resin prepared by reacting an ethylenically unsaturated monocarboxylic acid with an epoxy resin which is the polyglycidyl ether of an adduct of an ethylenically unsaturated hydrocarbon and a compound having at least one phenolic hydroxyl group per molecule, said epoxy resin having an average of more than 2 vicinal epoxy groups per molecule and an EEW of from about 150 to about 350; and at least one of the following selected from (b) and (c)
(b) at least one vinyl ester resin prepared by reacting at least one ethylenically unsaturated monocarboxylic acid with an epoxy resin having an average of not more than 2 vicinal epoxy groups per molecule and an EEW of from about 170 to about 600; or
(c) at least one vinyl ester resin prepared by reacting at least one ethylenically unsaturated monocarboxylic acid with an epoxy resin which is a polyglycidyl ether of a novolac resin prepared by reacting an aldehyde with a compound having at least one phenolic hydroxyl group per molecule, said epoxy resin having an average of more than 2 vicinal epoxy groups per molecule and an EEW of from about 150 to about 220;
wherein at least one of said vinyl ester resins has been modified with a rubber or elastomer wherein the total amount of elastomer or rubber is from about 2 to about 20 percent by weight based on total weight of components (A) and (B); or
(2) at least one vinyl ester resin which has been prepared by reacting at least one ethylenically unsaturated monocarboxylic acid with a mixture comprising
(a) at least one polyglycidyl ether of an adduct of an ethylenically unsaturated hydrocarbon and a compound having at least one phenolic hydroxyl group per molecule, said polyglycidyl ether having an average of more than 2 vicinal epoxy groups per molecule and an EEW of from about 150 to about 350; and at least one glycidyl ether selected from the following components (b) and (c);
(b) at least one diglycidyl ether of a compound having two aromatic hydroxyl groups per molecule, said diglycidyl ether having an EEW of from about 170 to about 600; or
(c) at least one polyglycidyl ether of novolac resin prepared by reacting an aldehyde with a compound having at least one phenolic hydroxyl group per molecule, said polyglycidyl ether having an average of more than 2 vicinal epoxy groups per molecule and an EEW of from about 150 to about 220; and
(d) at least one rubber or elastomer in an amount of from about 2 to about 20 percent by weight based on total weight of components (A) and (B); and optionally
(B) at least one polymerizable ethylenically unsaturated monomer; and wherein:
(i) when component (A) is component (A-1), then component (A-1-a) is present in an amount which corresponds to from about 25 to about 95 percent by weight of the combined weight of components (A-1-a), (A-1-b) and (A-1-c) and components (A-1-b) and (A-1-c) are present in an amount which corresponds to from about 5 to about 75 percent by weight of the combined weight of components (A-1-a), (A-1-b) and (A-1-c);

13

(ii) when component (A) is component (A-2) then component (A-2-a) is present in an amount which corresponds to from about 25 to about 95 percent by weight of the combined weight of components (A-2-a), (A-2-b) and (A-2-c) and components (A-2-b) and (A-2-c) are present in an amount which corresponds to from about 5 to about 75 percent by weight of the combined weight of components (A-2-a), (A-2-b) and (A-2-c) and component (A-2-d) is present in an amount which corresponds to from about 2 to about 20 percent by weight based on total resin weight; and

(iii) component (B) is present in an amount which corresponds to from zero to about 60 percent by weight based on the combined weight of components (A) and (B).

2. A composition of Claim 1 wherein

(a) when component (A) is component (A-1), then component (A-1-a) is present in an amount which corresponds to from about 30 to about 90 percent by weight of the combined weight of components (A-1-a), (A-1-b) and (A-1-c) and components (A-1-b) and (A-1-c) are present in an amount which corresponds to from about 10 to about 70 percent by weight of the combined weight of components (A-1-a), (A-1-b) and (A-1-c); and the total amount of rubber or elastomer is from about 3 to about 12 percent by weight based on total resin weight including any monomer;

(b) when component (A) is component (A-2), then component (A-2-a) is present in an amount which corresponds to from about 30 to about 90 percent by weight of the combined weight of components (A-2-a), (A-2-b) and (A-2-c) and components (A-2-b) and (A-2-c) are present in an amount which corresponds to from about 10 to about 70 percent by weight of the combined weight of components (A-2-a), (A-2-b) and (A-2-c); and component (A-2-d) is present in an amount which corresponds to from about 3 to about 12 percent by weight based on the combined weight of the vinyl ester resins; and

(c) component (B) is present in an amount which corresponds to from about 10 to about 55 percent by weight of the combined weight of components (A) and (B).

3. A composition of Claim 1 wherein

(a) when component (A) is component (A-1), then component (A-1-a) is present in an amount which corresponds to from about 40 to about 85 percent by weight of the combined weight of components (A-1-a), (A-1-b) and (A-1-c) and components (A-1-b) and (A-1-c) are present in an amount which corresponds to from about 15 to about 60 percent by weight of the combined weight of components (A-1-a), (A-1-b) and (A-1-c); and the total amount of rubber or elastomer is from about 3 to about 10 percent by weight based on total resin weight including any monomer;

(b) when component (A) is component (A-2), then component (A-2-a) is present in an amount which corresponds to from about 40 to about 85 percent by weight of the combined weight of components (A-2-a), (A-2-b) and (A-2-c) and components (A-2-b) and (A-2-c) are present in an amount which corresponds to from about 15 to about 60 percent by weight of the combined weight of components (A-2-a), (A-2-b) and (A-2-c); and component (A-2-d) is present in an amount which corresponds to from about 3 to about 10 percent by weight based on the combined weight of the vinyl ester resins; and

(c) component (B) is present in an amount which corresponds to from about 20 to about 50 percent by weight of the combined weight of components (A) and (B).

4. A composition of Claim 1 wherein

(a) component (A) is component (A-1) wherein component (A-1-a) is a vinyl ester resin prepared from a polyglycidyl ether of an adduct of phenol or a substituted phenol and dicyclopentadiene or higher oligomers of cyclopentadiene having an EEW of from about 200 to about 300 and acrylic acid, methacrylic acid, or a combination thereof; component (A-1-b) is a vinyl ester resin prepared from a diglycidyl ether of a bisphenol having an EEW of from about 170 to about 360 and acrylic acid, methacrylic acid, or a combination thereof; component (A-1-c) is a vinyl ester resin prepared from a polyglycidyl ether of an adduct of phenol or a substituted phenol and an aldehyde having an EEW of from about 170 to about 190 and acrylic acid, methacrylic acid, or a combination thereof; and the rubber or elastomer is a carboxyl containing acrylonitrile-butadiene copolymer or a 2-ethylhexyl acrylate copolymer rubber or grafted rubber particles having a rubbery core and a grafted polymer shell; and

(b) component (B) is styrene, α-methyl styrene, vinyl toluene, diallyl phthalate, methyl methacrylate, divinyl benzene or a combination thereof.

5. A composition of Claim 4 wherein

(a) component (A) is component (A-1) wherein component (A-1-a) is a vinyl ester resin prepared from a polyglycidyl ether of an adduct of phenol and dicyclopentadiene or higher oligomers of dicyclopentadiene and methacrylic acid; component (A-1-b) is a vinyl ester resin prepared from a diglycidyl ether of bisphenol A having an EEW of from about 170 to about 250 and methacrylic acid; and component (A-1-c) is a vinyl ester resin prepared from a polyglycidyl ether of an adduct of phenol and formaldehyde and methacrylic acid; and the rubber or elastomer is a carboxyl containing acrylonitrile-butadiene copolymer or a 2-ethylhexyl acrylate copolymer rubber; and

    (b) component (B) is styrene, divinylbenzene or a combination thereof.

    6. A composition of Claim 2 wherein

    (a) component (A) is component (A-1) wherein component (A-1-a) is a vinyl ester resin prepared from a polyglycidyl ether of an adduct of phenol or a substituted phenol and dicyclopentadiene or higher oligomers of cyclopentadiene having an EEW of from about 200 to about 300 and acrylic acid, methacrylic acid, or a combination thereof; component (A-1-b) is a vinyl ester resin prepared from a diglycidyl ether of a bisphenol having an EEW of from about 170 to about 360 and acrylic acid, methacrylic acid, or a combination thereof; component (A-1-c) is a vinyl ester resin prepared from a polyglycidyl ether of an adduct of phenol or a substituted phenol and an aldehyde having an EEW of from about 170 to about 190 and acrylic acid, methacrylic acid, or a combination thereof; and the rubber or elastomer is a carboxyl containing acrylonitrile-butadiene compolymer or a 2-ethylhexyl acrylate copolymer rubber; and

    (b) component (B) is styrene, α-methyl styrene, vinyl toluene, diallyl phthalate, methyl methacrylate, divinyl benzene or a combination thereof.

    7. A composition of Claim 6 wherein

    (a) component (A) is component (A-1) wherein component (A-1-a) is a vinyl ester resin prepared from a polyglycidyl ether of an adduct of phenol and dicyclopentadiene or higher oligomers of cyclopentadiene and methacrylic acid; component (A-1-b) is a vinyl ester resin prepared from a diglycidyl ether of bisphenol A having an EEW of from about 170 to about 250 and methacrylic acid; and component (A-1-c) is a vinyl ester resin prepared from a polyglycidyl ether of an adduct of phenol and formaldehyde and methacrylic acid; and

    (b) component (B) is styrene, divinylbenzene or a combination thereof.

    8. A composition of Claim 3 wherein

    (a) component (A) is component (A-1) wherein component (A-1-a) is a vinyl ester resin prepared from a polyglycidyl ether of an adduct of phenol or a substituted phenol and dicyclopentadiene or higher oligomers of cyclopentadiene having an EEW of from about 200 to about 300 and acrylic acid, methacrylic acid, or a combination thereof; component (A-1-b) is a vinyl ester resin prepared from a diglycidyl ether of a bisphenol having an EEW of from about 170 to about 360 and acrylic acid, methacrylic acid, or a combination thereof; component (A-1-c) is a vinyl ester resin prepared from a polyglycidyl ether of an adduct of phenol or a substituted phenol and an aldehyde having an EEW of from about 170 to about 190 and acrylic acid, methacrylic acid, or a combination thereof; and the rubber or elastomer is a carboxyl containing acrylonitrile-butadiene copolymer or a 2-ethylhexyl acrylate copolymer rubber; and

    (b) component (B) is styrene, α-methyl styrene, vinyl toluene, diallyl phthalate, methyl methacrylate, divinyl benzene or a combination thereof.

    9. A composition of Claim 8 wherein

    (a) component (A) is component (A-1) wherein component (A-1-a) is a vinyl ester resin prepared from a polyglycidyl ether of an adduct of phenol and dicyclopentadiene or higher oligomers of cyclopentadiene and methacrylic acid; component (A-1-b) is a vinyl ester resin prepared from a diglycidyl ether of bisphenol A having an EEW of from about 170 to about 250 and methacrylic acid; and component (A-1-c) is a vinyl ester resin prepared from a polyglycidyl ether of an adduct of phenol and formaldehyde and methacrylic acid;

    (b) component (B) is styrene, divinylbenzene or a combination thereof.

    10. A composition of Claim 1 wherein

    (a) component (A) is component (A-2) wherein component (A-2-a) is a polyglycidyl ether of an adduct of phenol or a substituted phenol and dicyclopentadiene or higher oligomers of cyclopentadiene having an EEW of from about 200 to about 300; component (A-2-b) is a diglycidyl ether of a bisphenol having an EEW of from about 170 to about 360; component (A-2-c) is a polyglycidyl ether of an adduct of phenol or a

15

substituted phenol and an aldehyde having an EEW of from about 170 to about 190; and the rubber or elastomer is a carboxyl containing acrylonitrile-butadiene copolymer, or a 2-ethylhexyl acrylate copolymer rubber or grafted rubber particles having a rubbery core and a grafted polymer shell; and

(b) component (B) is styrene, α-methyl styrene, vinyl toluene, diallyl phthalate, methyl methacrylate, divinyl benzene or a combination thereof.

11. A composition of Claim 10 wherein

(a) component (A-2-a) is a polyglycidyl ether of an adduct of phenol and dicyclopentadiene or higher oligomers of cyclopentadiene;

(b) component (A-2-b) is a diglycidyl ether of bisphenol A having an EEW of from about 170 to about 250;

(c) component (A-2-c) is a polyglycidyl ether of an adduct of phenol and formaldehyde:

(d) component (A-2-d) is a carboxyl containing acrylonitrile-butadiene copolymer, or a 2-ethylhexyl acrylate copolymer rubber; and

(e) component (B) is styrene;.

12. A composition of Claim 2 wherein

(a) component (A) is component (A-2) wherein component (A-2-a) is a polyglycidyl ether of an adduct of phenol or a substituted phenol and dicyclopentadiene or higher oligomers of cyclopentadiene having an EEW of from about 200 to about 300; component (A-2-b) is a diglycidyl ether of a bisphenol having an EEW of from about 170 to about 360; component (A-2-c) is a polyglycidyl ether of an adduct of phenol or a substituted phenol and an aldehyde having an EEW of from about 170 to about 190; and the rubber or elastomer is a carboxyl containing acrylonitrile-butadiene copolymer, or 2-ethylhexyl acrylate copolymer rubber; and

(b) component (B) is styrene, α-methyl styrene, vinyl toluene, diallyl phthalate, methyl methacrylate, divinyl benzene or a combination thereof.

13. A composition of Claim 12 wherein

(a) component (A-2-a) is a polyglycidyl ether of an adduct of phenol and dicyclopentadiene or higher oligomers of cyclopentadiene;

(b) component (A-2-b) is a diglycidyl ether of bisphenol A having an EEW of from about 170 to about 250;

(c) component (A-2-c) is a polyglycidyl ether of an adduct of phenol and formaldehyde; and

(d) component (B) is styrene, divinylbenzene or a combination thereof.

14. A composition of Claim 3 wherein

(a) component (A) is component (A-2) wherein component (A-2-a) is a polyglycidyl ether of an adduct of phenol or a substituted phenol and dicyclopentadiene or higher oligomers of cyclopentadiene having an EEW of from about 200 to about 300; component (A-2-b) is a diglycidyl ether of a bisphenol having an EEW of from about 170 to about 360; component (A-2-c) is a polyglycidyl ether of an adduct of phenol or a substituted phenol and an aldehyde having an EEW of from about 170 to about 190; and the rubber or elastomer is a carboxyl containing acrylonitrile-butadiene copolymer or 2-ethylhexyl acrylate copolymer rubber; and

(b) component (B) is styrene, α-methyl styrene, vinyl toluene, diallyl phthalate, methyl methacrylate, divinyl benzene or a combination thereof.

15. A composition of Claim 14 wherein

(a) component (A-2-a) is a polyglycidyl ether of an adduct of phenol and dicyclopentadiene or higher oligomers of cyclopentadiene;

(b) component (A-2-b) is a diglycidyl ether of bisphenol A having an EEW of from about 170 to about 250;

(c) component (A-2-c) is a polyglycidyl ether of an adduct of phenol and formaldehyde; and

(d) component (B) is styrene, divinylbenzene or a combination thereof.

16. A curable composition which comprises a composition of Claim 1, 2, 3, 4, 5, 6, 7, 8, 9, 10, 11, 12, 13, 14 or 15 and a curing amount of a curing agent or curing catalyst therefor.

17. A curable composition of Claim 16 wherein said curing agent or catalyst is an organic peroxide.

18. A curable composition of Claim 16 wherein an accelerator for the curing agent or catalyst is also present.

19. A curable composition of Claim 18 wherein said accelerator is N,N-dimethyl aniline, N,N-diethyl aniline, N,N-dimethyl toluidine, N,N-dimethyl acetoacetamide, cobalt naphthenate, vanadium neodecanoate, or a combination thereof.

20. A curable composition of Claim 17 wherein an accelerator for the curing agent or catalyst is also present.

21. A curable composition of Claim 20 wherein said accelerator is N,N-dimethyl aniline, N,N-diethyl aniline, N,N-dimethyl toluidine, N,N-dimethyl acetoacetamide, cobalt naphthenate, vanadium neodecanoate, or a combination thereof.

22. A laminate or composite article resulting from curing a composition of Claim 16 which has been reinforced with one or more suitable reinforcing agents.

23. A laminate or composite article of Claim 22 wherein said reinforcing agent is glass, aramid, graphite or a combination thereof in woven, mat, roving or random fibrous form.

24. A laminate or composite article resulting from curing a composition of Claim 17 which has been reinforced with one or more suitable reinforcing agents.

25. A laminate or composite article of Claim 24 wherein said reinforcing agent is glass, aramid, graphite or a combination thereof in woven, mat, roving or random fibrous form.

26. A laminate or composite article resulting from curing a composition of Claim 18 which has been reinforced with one or more suitable reinforcing agents.

27. A laminate or composite article of Claim 26 wherein said reinforcing agent is glass, aramid, graphite or a combination thereof in woven, mat, roving or random fibrous form.

28. A laminate or composite article resulting from curing a composition of Claim 19 which has been reinforced with one or more suitable reinforcing agents.

29. A laminate or composite article of Claim 28 wherein said reinforcing agent is glass, aramid, graphite or a combination thereof in woven, mat, roving or random fibrous form.

30. A laminate or composite article resulting from curing a composition of Claim 20 which has been reinforced with one or more suitable reinforcing agents.

31. A laminate or composite article of Claim 30 wherein said reinforcing agent is glass, aramic, graphite or a combination thereof in woven, mat, roving or random fibrous form.

32. A laminate or composite article resulting from curing a composition of Claim 21 which has been reinforced with one or more suitable reinforcing agents.

33. A laminate or composite article of Claim 32 wherein said reinforcing agent is glass, aramid, graphite or a combination thereof in woven, mat, roving or random fibrous form.